# EUROPEAN PATENT SPECIFICATION

(11) **EP 3 882 018 B1**
(45) Date of publication and mention of the grant of the patent: **26.06.2024**
(21) Application number: 21157860.4
(22) Date of filing: 18.02.2021
(51) Int. Cl.: B32B 9/02, A47K 3/40, A47K 1/04, E04F 13/00, E04C 2/288, B32B 9/04, B32B 9/00, B32B 7/12, B32B 5/02, B44C 5/04, B32B 5/18, B32B 5/24, B32B 5/26, B32B 13/04, B32B 13/14, E04F 13/14, E04C 2/26

(54) **A DECORATIVE PANEL OR TRAY**
DEKORATIVE TAFEL ODER SCHALE
PANNEAU DÉCORATIF OU PLATEAU

(30) Priority: 16.03.2020 GB 202003747
(43) Date of publication of application: 22.09.2021
(73) Proprietor: Ferzoli, Imad, London W14 0DU (GB)
(72) Inventor: Ferzoli, Amer, Guildford, Surrey GU4 7DD (GB)
(74) Representative: Dolleymores

(56) References cited:
- EP-A1- 3 072 679
- EP-B1- 1 012 422
- EP-B1- 3 009 056
- EP-B1- 3 250 354
- WO-A1-2009/110870
- GB-A- 2 218 438
- KR-B1- 102 049 405

## Description

The present invention relates to a decorative panel or tray comprising a stone veneer surface.

Patent documents, bearing publication numbers WO2009/110870A1, GB2218438A and EP3072679A1, disclose known arrangements form mounting stone layers to backing board or insulation layers.

Recently it has been possible to produce very thin natural stone veneers by placing or creating a fibrous/resin layer on a block of stone and then, when the resin has set, removing a very thin layer of stone from the block of stone to a form laminated sheet comprising of a stone veneer on a resin/fibre substrate.

The stone veneer may typically be about 0.5mm thick with a total thickness of the laminated sheet comprising the stone veneer and the fibre/resin layer being typically about 2mm thick. The fibrous material may for example be a polyester fibre.

The above described laminated sheet is relatively flexible and some examples of such sheets can be sold and transported as a rolled-up sheet. Examples of such laminated sheets are available from Classical Natural Stone Pvt Ltd. of India.

Natural stone laminated sheets, of the above described type, find many applications, and one particular application is for wall decoration. In order to apply the stone laminated sheet to a wall, it is necessary to first prepare the wall to provide a very level, even surface, to avoid any imperfections or unevenness distorting and thus being visible through the very thin laminated sheet, once applied to the wall.

After a wall has been suitably prepared, a layer of adhesive is applied to the wall and the stone laminated sheet applied to the adhesive or, where necessary, the stone laminated sheet is first laid out and cut to size before then being applied to the wall.

The above process is very skilled, particularly as once the stone laminated sheet has been applied to a wall it is very difficult to reposition on the adhesive, due to the very thin nature of the stone laminated sheet. This is compounded by the requirement to ensure that where more than one sheet is required to cover a wall, adjacent sheets have to be precisely abutted together to avoid the join between the sheets being visible.

It is an object of the present invention to provide an improved product, and method for producing that product, which product may be used to provide a natural stone finish.

According to the first aspect of the present invention there is provided a decorative panel or tray as recited in Claim 1. The present invention provides a decorative panel with a thin stone laminated sheet bonded to a relatively rigid backing board. This enables the decorative panel to be easily cut or sawn and positioned in place, in a similar manner to which a sheet of plasterboard or other covering panel may be applied to studwork or to an existing wall.

A significant advantage of this is that it enables natural stone surfaces to be applied to a wall by cutting and mounting appropriate decorative panels in accordance with the invention, enabling relatively unskilled "do-it-yourself" enthusiasts to create realistic looking natural stone walls.

In the case of either a decorative panel or a decorative tray in accordance with the present invention, the substrate may comprise a layer of fibre and resin, for example polyester fibres resin bonded to the layer of stone. The fibres and resin will normally be applied to the surface of a block of stone as part of the process of separating a layer of stone from the block of stone.

In the case of a decorative panel this may have a thickness of between 8mm and 12mm, and more preferably 10mm. Of this 10mm thickness, the laminated sheet may be 2mm thick and the backing board may be 8mm thick. Such a decorative panel having a 10mm thickness will thus have a thickness matching with that of a typical tile and adhesive layer, enabling tiles adhered to a wall to have a front surface flush with a front surface of a decorative panel fixed to that same wall.

In the case of either a decorative panel or a decorative tray in accordance with the present invention, preferably the laminated sheet is relatively flexible and, depending on the type or manufacturer of the laminated sheet, prior to being bonded to the backing board, may be rolled up, whilst the backing board is relatively rigid. This may enable the laminated sheet to be created at or close to a source of appropriate stone, which for example may be in a first country, and then transported either as multiple thin layers of stacked sheets on a pallet, for example, or, where only a few sheets are to be transported together, these may rolled up and transported in the form of a roll. In this manner, the laminated sheets may be relatively easily transported to a geographic location remote from the source of the stone. At this second location the laminated sheets may then be applied to the relatively bulky backing boards for subsequent local distribution and sale, which for example may be for sale within a particular country or region remote from the source of stone.

Regardless of whether the laminated layer is applied to the backing board remote from or local to the source of stone, applying the laminated layer to the backing board provides a stiff rigid board which is easily transported and may be cut by conventional means and applied to a wall or floor in a conventional manner, enabling the DIY enthusiast to do this.

The backing board comprises a relatively thick central layer, which may be a layer of polystyrene and one thin outer layer. A polystyrene layer is very light and relatively rigid, ideal for providing a relatively lightweight backing board, but polystyrene is relatively easy to crush and if bent will snap. Thus the outer first stiffening layer is used to provide a protective crush resistant layer in the form of a hardened outer shell. This may also provide a better surface finish than the polystyrene layer.

The outer layer may be a cement layer which may comprise a fibreglass reinforcement mesh. Such an outer layer is relatively incompressible and rigid, so in addition to providing a hard outer surface protecting the central polystyrene layer from localised crushing or distortion, the outer layer also acts to significantly stiffen the backing board and prevent it from bending and snapping.

The present invention provides a second outer stiffening layer in the form of the laminated sheet applied directly to the central layer, to form a second major face of the decorative panel or tray.

In the above manner a single outer layer of the backing board, together with the laminated sheet may together provide opposed stiffening outer layers of the decorative panel or tray, avoiding the need to have a backing board with two outer stiffening layers.

A decorative panel in accordance with the present invention may be manufactured as a standard 2400mm by 1200mm sheet or may be manufactured as a rectangular sheet of some other size, for example a 2400mm by 900mm sheet or a 3000mm long sheet.

It is preferable if all the components of the decorative panel or tray are inherently waterproof, for a major advantage of a decorative panel or tray in accordance with the present invention is that the outer surface is of natural stone which will itself be inherently waterproof, and thus if the panel or tray is inherently waterproof it may be used in kitchens, bathrooms, wet rooms or in any other wet area.

In the case of a decorative tray in accordance with the present invention, this may provide a shower tray or sink tray constructed in the same manner but here the backing board may be significantly thicker than in the case of a decorative panel, for example the backing board could be between 20mm and 100mm thick and could be premoulded with a depression where it is desired that the shower tray or sink tray has such a preformed depression.

According to a second aspect of the present invention there is provided a method of making a decorative panel or tray as described above, the method comprising an automated process for applying a layer of adhesive to one of the laminated sheet or the backing board, mechanically bringing the two together and compressing the two together. The compressing together of the two sheets could, for example, be by means of a press or roller.

A method in accordance with the present invention makes it possible to reliably apply the laminated layer to the backing board in an automated process.

According to a third aspect of the present invention there is provided a method of panelling a room comprising abutting together multiple ones of the decorative panels described above on studwork or on a wall and fixing the decorative panels to the studwork or wall.

One example of the present will now be described, by way of example only, with reference to the accompanying drawings, of which:
Figure 1 is a perspective view of a decorative panel not in accordance with the present invention;
Figure 2 is a cross section through the layers of the decorative panel of Figure 1;
Figure 3 corresponds to Figure 2 but shows the laminated layer separate to the backing board, prior to the laminated layer being bonded to the backing board;
Figure 4 is a cross section corresponding to Figure 2, but showing the layers of an alternative decorative panel in accordance with the present invention;
Figure 5 corresponds to Figure 4 but shows the laminated layer separate to the backing board, prior to the laminated layer being bonded to the backing board; and
Figure 6 shows a number of panels applied to a wall of a room.

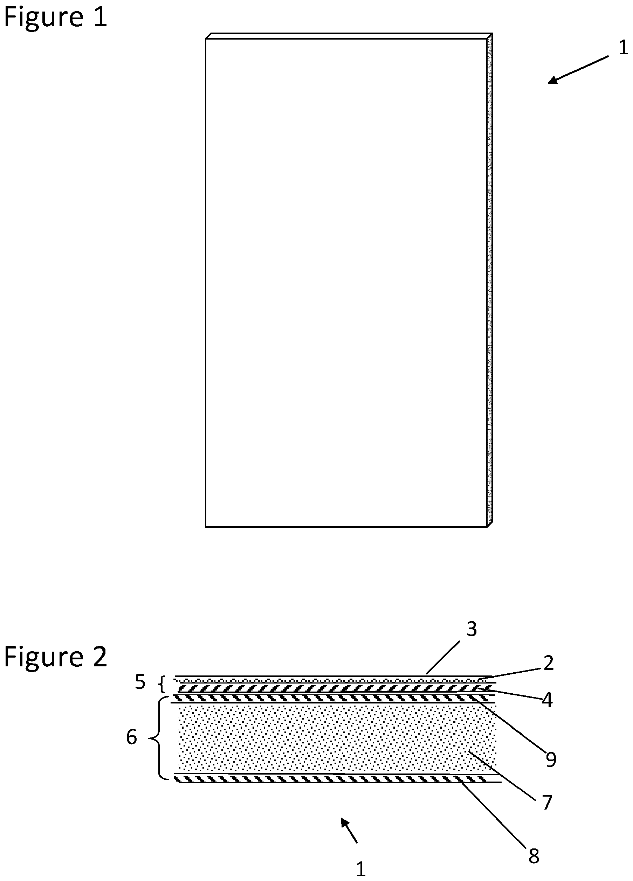

Referring now to Figure 1, a decorative panel 1 is shown which in this example has a length of 2400mm, a width of 1200mm and a thickness of 10mm.

Referring to Figure 2, this cross section through the decorative panel 1 of Figure 1 shows the decorative panel 1 to comprise a stone veneer layer 2 of 0.5mm thickness on a front surface 3 of the decorative panel 1. The stone veneer layer 2 is bonded to a fibre and resin substrate layer 4, which is about 1.5mm thick. These two layers together form a laminated layer 5 which is approximately 2mm thick. The laminated layer 5 is bonded to a backing board 6 which is approximately 8 mm thick. The backing board 6 comprises a central layer 7 formed from expanded polystyrene foam, which is approximately 6mm thick, with two outer layers 8 and 9, each comprising a mesh reinforced cement layer, each approximately 1mm thick.

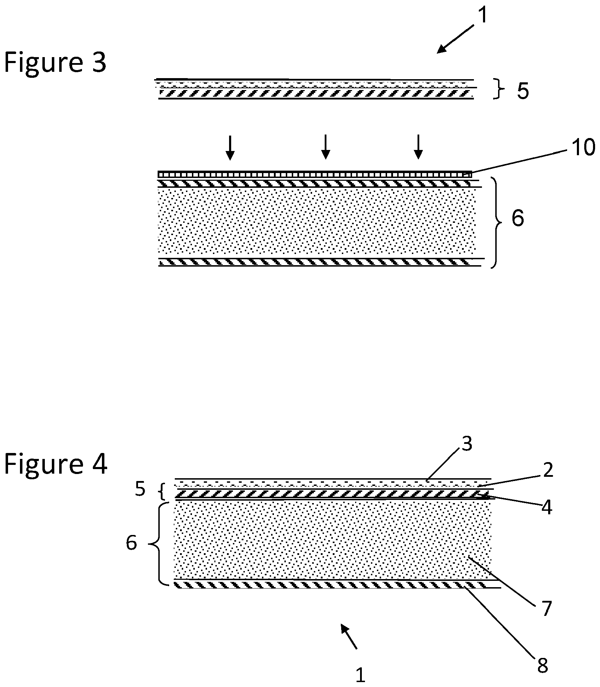

Referring to Figure 3, this shows the construction of the decorative panel 1, where the laminated layer 5 is brought together onto the backing board 6 to which has been applied a layer of adhesive 10, which may for example be Sikaflex ^{®} EPTF, the laminated layer 5 being mechanically pressed against the backing board 6 to secure the laminated layer 5 to the backing board 6.

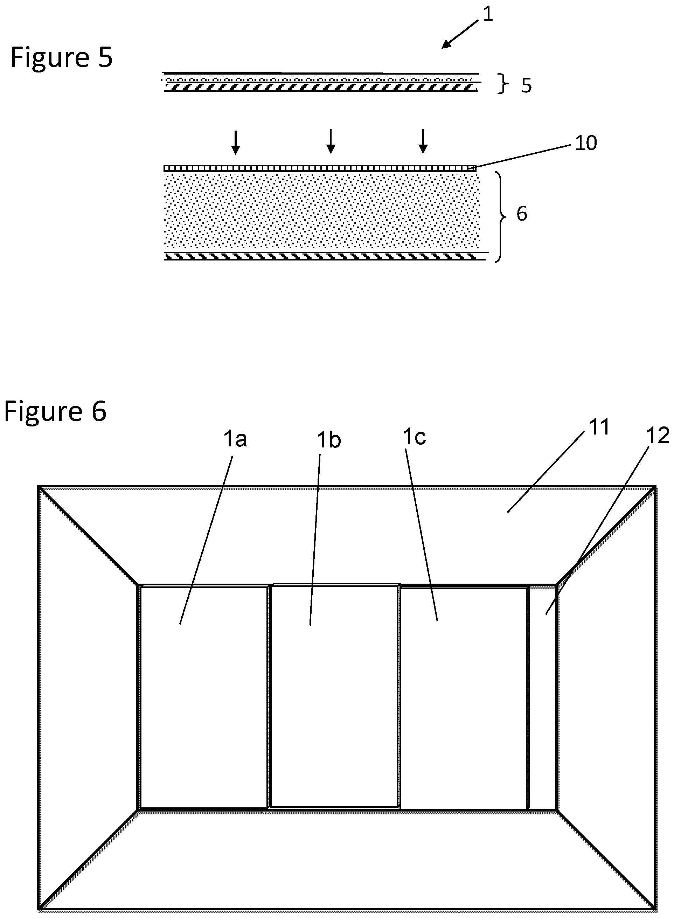

Referring now to Figures 4 and 5, these correspond essentially to the previously described Figures 2 and 3 respectively, but here, in accordance with the present invention, the backing board 6 comprises only a single outer layer 8 of a mesh reinforced cement layer, approximately 1mm thick. The second outer layer 9 of Figure 2 has been omitted and, as can be seen from Figure 5, here the layer of adhesive 10 is applied directly to the expanded polystyrene foam layer 7. Thus, in this embodiment the laminated layer is bonded directly to the expanded polystyrene foam layer 7 of the backing board 6, as shown in Figure 4.

Referring now to Figure 6, this shows a room, indicated generally as 11, in which three decorative panels 1a, 1b and 1c have been applied to a wall 12. The room could for example be a bathroom or a kitchen and the panels could be inherently waterproof, by virtue of the composition of all the components of the panels being inherently waterproof, making the panels suitable for use in wet areas such as in wet rooms.

The present invention has been described above, by way of example only, with reference to accompanying drawings. However, it will be appreciated that modifications may be made without departing from the scope of the invention as determined by the following claims, particularly the invention is not limited to the use of any particular type of backing board, and the backing board could be substantially thicker than that previously described, permitting the invention to be used in other applications to decorative panels, for example it could be used to form a sink or shower tray.

## Claims

1. A decorative panel (1) or tray, comprising:
a layer of stone (2) of between 0.2mm and 1mm thick;
a substrate (4) bonded to the layer of stone (2) to form a laminated sheet (5) having a thickness of between 1mm and 3mm; and
a backing board (6) bonded to the laminated sheet (5), the backing board having a thickness greater than 5mm, wherein:
the backing board comprises a relatively thick central layer (7) and a relatively thin outer layer (8), which first relatively thin outer layer is a stiffening layer (8) forming a first major face of the backing board (6) and a first major face of the decorative panel (1) or tray and wherein the laminated sheet (5) forms a second major face of the decorative panel (1) or tray opposite to the first major face, **characterised in that** the central layer extends from a central region of the backing board to form a second major face of the backing board opposite to the first major face of the backing board, and wherein the laminated sheet is applied directly to the central layer, which laminated sheet forms a second stiffening layer.

2. A decorative panel (1) or tray as claimed in Claim 1, wherein the substrate comprises a layer of fibres and resin.

3. A decorative panel (1) or tray as claimed in any preceding claim, wherein every component is inherently waterproof.

4. A decorative panel (1) or tray as claimed in any preceding claim, wherein the laminated sheet (5) is relatively flexible, prior to being bonded to the backing board (6), and wherein the backing board (6) is relatively rigid.

5. A decorative panel (1) or tray as claimed in any preceding claim, wherein the central layer (7) of the backing board (6) comprises a layer of polystyrene.

6. A decorative panel or tray as claimed in any one of Claims 1 to 5, wherein, prior to bonding to the backing board (6) the laminated sheet (5) may be rolled up.

7. A decorative panel (1) or tray as claimed in any one of Claims 1 to 6, wherein the outer first stiffening layer (8) is a cement layer.

8. A decorative panel (1) or tray as claimed in Claim 7, wherein the cement layer (8) comprises a reinforcement mesh.

9. A decorative panel (1) as claimed in any preceding claim, having a thickness of between 5mm and 25mm.

10. A decorative panel (1) as claimed in any preceding claim, having a thickness of between 8mm and 15mm.

11. A decorative panel (1) as claimed in any one of Claims 9 to 10, which is rectangular and has a length of 2400mm and a width of 1200mm or less.

12. A decorative tray as claimed in any one of Claims 1 to 8, which decorative tray is in the form of a shower tray or sink tray.

13. A method of making a decorative panel (1) or tray, **characterised in that** the decorative panel or tray is in accordance with any preceding claim, the method comprising an automated process for applying a layer of adhesive to one of the laminated sheet (5) or the backing board (6), mechanically bringing the two together and compressing the two together.

14. A method of panelling at least a portion of a room, the method comprising abutting one or more decorative panels (1) together on studwork or a wall and fixing the decorative panels to the studwork or wall, the method being **characterised in that** the one or more decorative panels (1) are in accordance with those of any one of Claims 1 to 11.

## Patentansprüche

1. Dekorative Tafel (1) oder Wanne, umfassend:
eine Schicht aus Stein (2), zwischen 0,2 mm und 1 mm dick;
ein Substrat (4), das an die Schicht aus Stein (2) geklebt ist, um eine laminierte Bahn (5) zu bilden, die eine Dicke von zwischen 1 mm und 3 mm aufweist; und
eine Rückenplatte (6), die an die laminierte Bahn (5) geklebt ist, wobei die Rückenplatte eine Dicke von mehr als 5 mm aufweist, wobei:
die Rückenplatte eine relativ dicke mittlere Schicht (7) und eine relativ dünne äußere Schicht (8) umfasst, wobei die erste relativ dünne äußere Schicht eine Versteifungsschicht (8) ist, die eine erste Hauptoberfläche der Rückenplatte (6) und eine erste Hauptoberfläche der dekorativen Tafel (1) oder Wanne bildet, und wobei die laminierte Bahn (5) eine der ersten Hauptoberfläche gegenüberliegende zweite Hauptoberfläche der dekorativen Tafel (1) oder Wanne bildet, **dadurch gekennzeichnet, dass** sich die mittlere Schicht von einem mittleren Bereich der Rückenplatte erstreckt, um eine der ersten Hauptoberfläche der Rückenplatte gegenüberliegende zweite Hauptoberfläche der Rückenplatte zu bilden, und wobei die laminierte Bahn direkt auf die mittlere Schicht aufgebracht wird, wobei die laminierte Bahn eine zweite Versteifungsschicht bildet.

2. Dekorative Tafel (1) oder Wanne nach Anspruch 1, wobei das Substrat eine Schicht aus Fasern und Harz umfasst.

3. Dekorative Tafel (1) oder Wanne nach einem der vorangehenden Ansprüche, wobei jede Komponente inhärent wasserfest ist.

4. Dekorative Tafel (1) oder Wanne nach einem der vorangehenden Ansprüche, wobei die laminierte Bahn (5), bevor sie an die Rückenplatte (6) geklebt wird, relativ biegsam ist und wobei die Rückenplatte (6) relativ steif ist.

5. Dekorative Platte (1) oder Wanne nach einem der vorangehenden Ansprüche, wobei die mittlere Schicht (7) der Rückenplatte (6) eine Schicht aus Polystyrol umfasst.

6. Dekorative Tafel (1) oder Wanne nach einem der Ansprüche 1 bis 5, wobei die laminierte Bahn (5) vor dem Kleben an die Rückenplatte (6) aufgerollt werden kann.

7. Dekorative Tafel (1) oder Wanne nach einem der Ansprüche 1 bis 6 wobei die äußere erste Versteifungsschicht (8) eine Bindemittelschicht ist.

8. Dekorative Tafel (1) oder Wanne nach Anspruch 7, wobei die Bindemittelschicht (8) ein Verstärkungsgewebe umfasst.

9. Dekorative Tafel (1) nach einem der vorangehenden Ansprüche, die eine Dicke von zwischen 5 mm und 25 mm aufweist.

10. Dekorative Tafel (1) nach einem der vorangehenden Ansprüche, die eine Dicke von zwischen 8 mm und 15 mm aufweist.

11. Dekorative Tafel (1) nach einem der Ansprüche 9 bis 10, die rechteckig ist und eine Länge von 2400 mm und eine Breite von 1200 mm oder weniger aufweist.

12. Dekorative Wanne nach einem der Ansprüche 1 bis 8, wobei die dekorative Wanne in Form einer Duschwanne oder eines Wasch-/Spülbeckens ist.

13. Verfahren zum Herstellen einer dekorativen Tafel (1) oder Wanne, **dadurch gekennzeichnet, dass** die dekorative Tafel oder Wanne gemäß einem der vorangehenden Ansprüche ist, wobei das Verfahren einen automatisierten Prozess zum Aufbringen einer Schicht aus Klebstoff auf eine von der laminierten Bahn (5) oder der Rückenplatte (6), das mechanische Zusammenbringen der beiden und das Zusammendrücken der beiden umfasst.

14. Verfahren zum Täfeln mindestens eines Abschnitts eines Raums, wobei das Verfahren das Stoßen einer oder mehrerer dekorativer Tafeln (1) aneinander auf einem Fachwerk oder einer Wand und das Befestigen der dekorativen Tafeln an dem Fachwerk oder der Wand umfasst, wobei das Verfahren **dadurch gekennzeichnet, ist, dass** die eine oder die mehreren dekorativen Tafeln (1) gemäß denjenigen nach einem der Ansprüche 1 bis 11 sind.

## Revendications

1. Panneau décoratif (1) ou plateau, comprenant :
une couche de pierre (2) d'une épaisseur comprise entre 0,2 mm et 1 mm ;
un substrat (4) collé à la couche de pierre (2) pour former une feuille stratifiée (5) d'une épaisseur comprise entre 1 mm et 3 mm ; et
un panneau de support (6) collé à la feuille stratifiée (5), le panneau de support ayant une épaisseur supérieure à 5 mm, dans lequel :
le panneau de support comprend une couche relativement centrale (7) et une couche extérieure relativement mince (8), cette première couche extérieure relativement mince étant une couche de raidissement (8) formant une première face principale du panneau de support (6) et une première face principale du panneau décoratif (1) ou du plateau et dans lequel la feuille stratifiée (5) forme une deuxième face principale du panneau décoratif (1) ou du plateau opposée à la première face principale, **caractérisé par le fait que** la couche centrale se prolonge à partir de la région centrale du panneau de support pour former une deuxième face principale du panneau de support opposée à la face principale du panneau de support, et dans lequel la feuille stratifiée est appliquée directement sur la couche centrale, laquelle feuille stratifiée forme une deuxième couche de raidissement.

2. Panneau décoratif (1) ou plateau selon la revendication 1, dans lequel le substrat comprend une couche de fibres et de résine.

3. Panneau décoratif (1) ou plateau selon l'une quelconque des revendications précédentes, dans lequel chaque composant est intrinsèquement imperméable à l'eau.

4. Panneau décoratif (1) ou plateau selon l'une quelconque des revendications précédentes, dans lequel la feuille stratifiée (5) est relativement souple avant d'être collée au panneau de support (6) et dans lequel le panneau de support (6) est relativement rigide.

5. Panneau décoratif (1) ou plateau selon l'une quelconque des revendications précédentes, dans lequel la couche centrale (7) du panneau support (6) comprend une couche de polystyrène.

6. Panneau décoratif (1) ou plateau selon l'une quelconque des revendications 1 à 5, dans lequel la feuille stratifiée (5) peut être enroulée avant d'être collée au panneau de support (6).

7. Panneau décoratif (1) ou plateau selon l'une quelconque des revendications 1 à 6, dans lequel la première couche extérieure de raidissement (8) est une couche de ciment.

8. Panneau décoratif (1) ou plateau selon la revendication 7, dans lequel la couche de ciment (8) comprend un treillis de renforcement.

9. Panneau décoratif (1) ou plateau selon une quelconque revendication précédente, ayant une épaisseur comprise entre 5 mm et 25 mm.

10. Panneau décoratif (1) ou plateau selon une quelconque revendication précédente, ayant une épaisseur comprise entre 8 mm et 15 mm.

11. Panneau décoratif (1) ou plateau selon l'une quelconque des revendications 9 à 10, qui est rectangulaire, et d'une longueur de 2400 mm et d'une largeur inférieure ou égale à 1200 mm.

12. Plateau décoratif selon l'une quelconque des revendications 1 à 8, lequel plateau décoratif se présente sous la forme d'un bac de douche ou d'un bac à évier.

13. Procédé de fabrication d'un panneau décoratif (1) ou d'un plateau, **caractérisé en ce que** le panneau décoratif ou le plateau est conforme à l'une quelconque des revendications précédentes, le procédé consistant en un processus automatisé d'application d'une couche d'adhésif sur l'une de la feuille stratifiée (5) ou du panneau de support (6), de rapprochement mécanique des deux et de compression des deux.

14. Procédé d'habillage d'au moins une partie d'une pièce, consistant à accoler un ou plusieurs panneaux décoratifs (1) à des montants ou à un mur et à fixer les panneaux décoratifs aux montants ou au mur, le procédé étant **caractérisé par le fait que** le ou les panneaux décoratifs (1) est/sont conformes à ceux de l'une quelconque des revendications 1 à 11.
